# FASCICULE DE BREVET EUROPEEN

(11) **EP 1 673 194 B1**
(45) Date de publication et mention de la délivrance du brevet: **18.07.2007**
(21) Numéro de dépôt: 04791512.9
(22) Date de dépôt: 11.10.2004
(51) Int. Cl.: B23K 11/30, B23K 11/31, B25J 19/00

(54) **ROBOT DE SOUDAGE COMPORTANT UNE RODEUSE D'ELECTRODES FIXE SUR UN ENSEMBLE MOBILE DUDIT ROBOT**
SCHWEISSROBOTER MIT EINER AUF EINER BEWEGLICHEN ROBOTEREINHEIT BEFESTIGTEN ELEKTRODEN-LÄPPMASCHINE
WELDING ROBOT COMPRISING A FIXED ELECTRODE LAPPER ON A MOVEABLE ROBOT UNIT

(30) Priorité: 14.10.2003 FR 0311974
(43) Date de publication de la demande: 28.06.2006
(73) Titulaire: ABB France, 92566 Rueil Malmaison (FR)
(72) Inventeur: REBIERE, Hervé, F-95270 VIARMES (FR)
(74) Mandataire: Lavialle, Bruno François Stéphane
(86) Numéro de dépôt international: PCT/FR2004/002569
(87) Numéro de publication internationale: WO 2005/037481

(56) Documents cités:
- FR-A1- 2 750 631
- US-A- 5 449 878
- US-A1- 2002 087 233
- US-B1- 6 339 204
- PATENT ABSTRACTS OF JAPAN vol. 018, no. 435 (M-1655), 15 août 1994 (1994-08-15) & JP 06 134683 A (FANUC LTD), 17 mai 1994 (1994-05-17)
- PATENT ABSTRACTS OF JAPAN vol. 013, no. 376 (M-862), 21 août 1989 (1989-08-21) & JP 01 130886 A (MITSUBISHI ELECTRIC CORP), 23 mai 1989 (1989-05-23)
- PATENT ABSTRACTS OF JAPAN vol. 017, no. 244 (M-1410), 17 mai 1993 (1993-05-17) & JP 04 367379 A (MITSUBISHI ELECTRIC CORP), 18 décembre 1992 (1992-12-18)

## Description

La présente invention concerne un robot de soudage conformément au préambule de la revendication 1 (voir, par exemple, US-B1-6 339 204), ce robot étant utilisable notamment pour l'assemblage de tôles de carrosserie d'automobiles.

### ARRIERE PLAN DE L'INVENTION

Un robot de soudage comprend généralement un socle recevant à pivotement une partie formant thorax à laquelle est reliée par une articulation nommée épaule un bras articulé ayant une extrémité libre pourvue d'une pince équipée d'électrodes de soudage.

La pression exercée sur les tôles par les électrodes de soudage et la chaleur engendrée par le passage du courant dans les électrodes conduisent à une déformation des électrodes tendant à augmenter la surface de contact des électrodes avec les tôles. Ceci engendre une diminution de la densité du courant passant par les électrodes de sorte qu'il est nécessaire d'augmenter périodiquement l'intensité du courant avant de procéder, lorsque la déformation est trop importante, à un rodage des électrodes pour rendre à celles-ci leur forme initiale.

Ce rodage est réalisé au moyen d'une rodeuse fixée sur le sol ou sur la plate-forme supportant le robot, à proximité de celui-ci.

Le positionnement de la rodeuse doit être pris en compte lors de la programmation des mouvements du robot, d'une part, pour amener la pince dans la rodeuse et, d'autre part, pour éviter que les mouvements du robot interfèrent avec la rodeuse lors des opérations de soudage.

Le positionnement de la rodeuse est également pris en compte lors de la programmation des robots avoisinants pour que leurs mouvements ne les conduisent pas à heurter la rodeuse.

Du positionnement de la rodeuse dépend également le tracé des goulottes recevant les câbles d'alimentation des robots et des rodeuses.

Or, il arrive qu'on s'aperçoive, une fois le robot implanté dans la chaîne où il doit travailler, que la rodeuse ne peut être positionnée comme prévu initialement. Ceci peut par exemple résulter de la présence d'une plaque d'égout ou d'un joint de dilatation empêchant la fixation au sol de la rodeuse.

Il est alors nécessaire de repositionner la rodeuse et donc de corriger la programmation du robot et éventuellement des robots avoisinants, et de refaire le tracé des goulottes.

Il en est de même lorsque le robot et la rodeuse sont montés sur une plate-forme : la présence de poutres, de câbles ou de lumière peut gêner la fixation de la rodeuse.

Il est connu, notamment du document US-B-6 339 204, un robot comprenant une rodeuse fixée sur le socle du robot. La rodeuse étant montée sur le robot, le faisceau d'alimentation de la rodeuse peut être regroupé avec le faisceau d'alimentation du robot. De plus, la fixation au sol de la rodeuse résulte de la fixation au sol du robot et ne nécessite donc pas d'opérations supplémentaires. Toutefois, la rodeuse peut quand même gêner les mouvements du robot ou ceux de ses voisins et sa position nécessite d'être prise en compte lors de la programmation du robot.

### OBJET DE L'INVENTION

Un but de l'invention est de proposer un moyen permettant le rodage des électrodes d'un robot de soudage, qui soit simple d'implantation et occasionne une gêne limitée vis-à-vis du robot de soudage ou de robots environnants.

### BREVE DESCRIPTION DE L'INVENTION

A cet effet, on prévoit, selon l'invention, un robot de soudage tel que définit dans la revendication 1.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 est une vue schématique en perspective d'un robot conforme à l'invention,

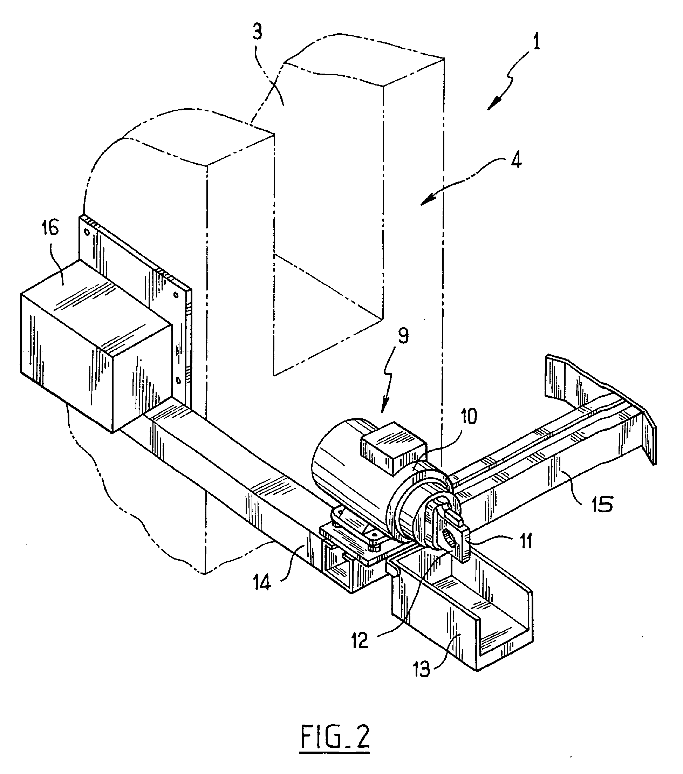

- la figure 2 est une vue schématique en perspective de la rodeuse équipant ce robot.

### DESCRIPTION DETAILLEE DE L'INVENTION

Le robot conforme à l'invention, généralement désigné en 1 est un robot six axes comprenant, de façon connue en elle-même, un socle 2 recevant à pivotement autour d'un axe vertical une partie formant thorax 3 ayant une face avant 4.

Sur la partie formant thorax 3, est montée une extrémité 5 d'un bras articulé, généralement désigné en 6 pour pivoter autour d'un axe horizontal parallèle à la face avant 4. La liaison entre la partie formant thorax 3 et le bras articulé 6 forme l'épaule du robot.

Le bras articulé 6 possède, à l'opposé de l'extrémité 5, une extrémité 7 pourvue d'une pince 8 à deux mors dont les extrémités libres sont équipées d'électrodes de soudage.

La partie formant thorax 3 et le bras articulé 6 forment l'ensemble mobile du robot.

Le robot 1 comprend une rodeuse, généralement désignée en 9, qui comporte de façon connue en elle-même un moteur 10 d'entraînement de deux fraises montées pour pivoter dans un support 11 ouvert sur deux faces 12 opposées pour permettre la mise en contact des électrodes avec les arêtes coupantes des fraises. Les faces 12 sont ici verticales, les fraises tournant autour d'un axe horizontal perpendiculaire à ces faces de manière que les copeaux soient évacués sous l'effet de la gravité dans un bac récupérateur 12 s'étendant à l'aplomb du support 11.

Le moteur 10 de la rodeuse 9 est ici boulonné sur une armature 14 en L comprenant une partie de fixation à la partie formant thorax 3 et une partie terminale en forme de glissière 15 le long de laquelle la rodeuse 9 est réglable en position. L'armature 14 s'étend ici dans un plan horizontal, la partie de fixation étant montée sur un côté de la partie formant thorax 3 de telle manière que la glissière 15 s'étende devant la face avant 4.

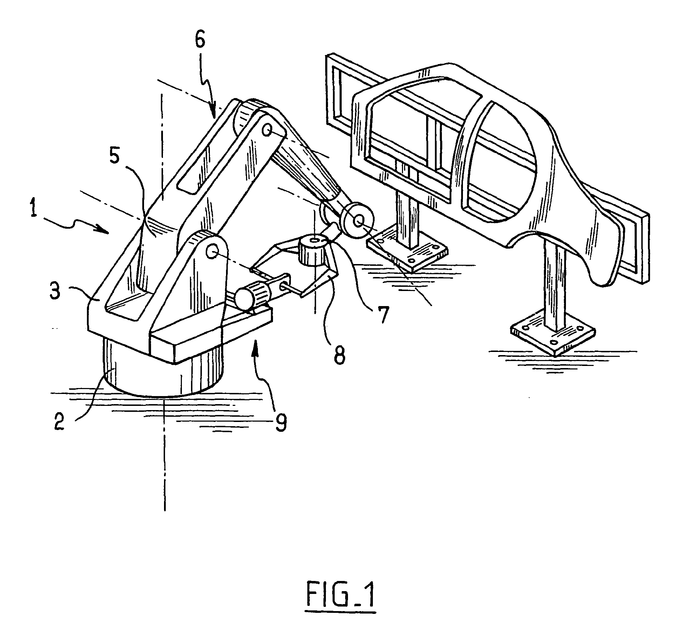

Ainsi, lorsque le robot est en position d'attente, la pince 8 au niveau de la face avant 4, un retournement de la pince permet d'amener la pince dans la rodeuse 9 (voir figure 1). Le réglage en position de la rodeuse 9 le long de la glissière 15 permet de positionner la rodeuse en fonction de la largeur de la pince 8 (la prise en compte des autres dimensions de la pince 8 est effectuée lors de la programmation du mouvement du robot pour amener la pince 8 dans la rodeuse 9).

On notera que la rodeuse 9 étant positionnée une fois pour toutes sur le robot 1, la programmation du robot est simplifiée. Il n'est plus nécessaire de prévoir la fixation de la rodeuse au sol ni même de prévoir des goulottes de passage des câbles d'alimentation de la rodeuse, ceux-ci étant incorporés dans le faisceau d'alimentation du robot 1 avant d'être raccordés au boîtier d'alimentation 16 de la rodeuse 9.

On notera également que la rodeuse 9 étant solidaire d'une partie mobile du robot 1, le rodage peut avoir lieu alors que le robot 1 effectue un mouvement de dégagement après une opération de soudage.

Bien entendu, l'invention n'est pas limitée au mode de réalisation décrit et on peut y apporter des variantes de réalisation sans sortir du cadre de l'invention tel que défini par la revendication 1.

Il convient de s'assurer que la rodeuse n'entrave pas les mouvements du robot 1 et est dans une zone accessible pour la pince 8.

Le robot peut avoir une structure différente de celle décrite et définie dans l'unique revendication 1 et présenter par exemple moins de six axes.

## Revendications

1. Robot de soudage (1) comprenant un socle (2) recevant à pivotement un ensemble mobile comportant une partie formant thorax (3) sur laquelle est montée pour pivoter une extrémité (5) d'un bras articulé (6) ayant une extrémité opposée (7) pourvue d'une pince (8) équipée d'électrodes de soudage, **caractérisé en ce qu'**il comprend une rodeuse d'électrodes (9) montée sur l'ensemble mobile dans une zone accessible par la pince, la rodeuse (9) étant montée sur une glissière horizontale (15) fixée à la partie formant thorax (3) pour s'étendre devant la face avant (4) de celle-ci.

## Claims

1. A welding robot (1) comprising a stand (2) pivotally receiving a moving assembly comprising a trunk-forming portion (3) having one end (5) of an articulated arm (6) pivotally mounted thereon, an opposite end (7) of the arm being provided with a clamp (8) fitted with welding electrodes, the robot being **characterized in that** it includes an electrode grinder (9) mounted on its moving assembly in a zone that is accessible to the clamp, the grinder (9) being mounted on a horizontal slideway (15) secured to the trunk-forming portion (3) to extend in front of the front face (4) of the trunk-forming portion.

## Patentansprüche

1. Schweißroboter (1), umfassend einen Sockel (2), der eine bewegliche Einheit verschwenkbar aufnimmt, die einen Abschnitt umfasst, der einen Rumpf (3) bildet, an dem ein Ende (5) eines Gelenkarms (6) drehbar gelagert ist, wobei der Gelenkarm ein entgegengesetztes Ende (7) hat, das mit einem mit Schweißelektroden ausgerüsteten Greifer (8) versehen ist, **dadurch gekennzeichnet, dass** er eine Elektrodenschleifmaschine (9) umfasst, die an der beweglichen Einheit in einem von dem Greifer zugänglichen Bereich angebracht ist, wobei die Schleifmaschine (9) auf einer horizontalen Gleitschiene (15) gelagert ist, die an dem den Rumpf (3) bildenden Abschnitt derart befestigt ist, dass sie sich vor dessen Vorderseite (4) erstreckt.
